(19) 

**Europäisches Patentamt**
**European Patent Office**
**Office européen des brevets**

(11) **EP 4 589 878 A1**

(12) **EUROPEAN PATENT APPLICATION**

(43) Date of publication:
**23.07.2025 Bulletin 2025/30**

(51) International Patent Classification (IPC):
*H04L 9/00* $^{(2022.01)}$     *H04L 9/30* $^{(2006.01)}$
*H04L 9/08* $^{(2006.01)}$

(21) Application number: **25152007.8**

(22) Date of filing: **15.01.2025**

(52) Cooperative Patent Classification (CPC):
**H04L 9/008; H04L 9/0858; H04L 9/3093;**
H04L 2209/34; H04L 2209/46

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **16.01.2024 US 202463621188 P**

(71) Applicant: **Su, Zheng-Yao**
**Taipei City (TW)**

(72) Inventor: **Su, Zheng-Yao**
**Taipei City (TW)**

(74) Representative: **Manitz Finsterwald**
**Patent- und Rechtsanwaltspartnerschaft mbB**
**Martin-Greif-Straße 1**
**80336 München (DE)**

(54) **SYSTEM FOR SECURE MULTI-PARTY EXACT HOMOMORPHIC ENCRYPTION AND COMPUTER-IMPLEMENTED METHOD FOR PERFORMING SECURE MULTI-PARTY EXACT HOMOMORPHIC ENCRYPTION**

(57)     A system and a method for secure multi-party exact homomorphic encryption (SMPEHE) comprising a first participant, a second participant and a third participant, wherein the system further comprises: a key generation module within the first participant to produce an encryption mapping comprising an ordered product of elementary gates; to generate a multivariate polynomial set, serving as a public encryption key, via the encryption mapping; to form an encryption operator serving as a private key; and to create an encrypted polynomial set representing a computational instruction based on an encrypted action; a message encryption module within the second participant to encode a plaintext message into a first ciphertext by the public key provided by the first participant; and to transmit the first ciphertext to the third participant; and a computation module within the third participant to receive the first ciphertext; and to perform a computation on the received first ciphertext by evaluating the encrypted polynomial set. The structure of SMPEHE is a multipartite extension of the framework EHE and protects information for multiple users across all stages from transmission, to processing and to storage. All attributes of EHE are inherited and generalized in SMPEHE, including the safeguard of both data and operations, exact encrypted computations as well as exact decryptions, blind computation, the fulfillments of quantum resilience and hyper quantum resilience, and the capabilities of performing large-scale and sophisticated encrypted computations. This structure is also deployable on CPU and GPU environments.

$$\mathcal{P}_{w,k}\left(\mathcal{R}_{en},;\boldsymbol{x}\right)$$

first participant

second participant

$$\left|\boldsymbol{c}\right\rangle = \left|\mathcal{R}_{en} \Vdash \boldsymbol{x}\right\rangle_{x=m}$$

$$\mathcal{R}_{cv}|\boldsymbol{s}\rangle$$

$$\mathcal{P}_{n,w}(\mathcal{U}_{cv};\boldsymbol{z})$$

$$|\boldsymbol{s}\rangle$$

$$|\boldsymbol{c}\rangle$$

third participant

$$\left|\boldsymbol{s}\right\rangle = \left|\mathcal{R}_{en} \Vdash \boldsymbol{z}\right\rangle_{z=c}$$

FIG. 1

EP 4 589 878 A1

**Description**

RELATED APPLICATIONS

The present application claims the priority of U.S. Provisional Patent Application No., filed on, the disclosure of which is hereby incorporated by reference herein in its entirety.

BACKGROUND OF THE INVENTION

**1.** FIELD OF THE INVENTION

The present disclosure generally relates to a system for encryption, particularly, to a system for secure multi-party exact homomorphic encryption and a computer-implemented method for performing secure multi-party exact homomorphic encryption.

**2.** DESCRIPTION OF THE RELATED ART

Homomorphic Encryption (HE) permits users to compute on encrypted messages without prior decryption, thus rendering a high level of security for the data processing. Over the next 30 years, improvements in HE remained rather constrained until Gentry's proposal in 2009. His dissertation theoretically allowed arbitrary encrypted computation contingent upon unlimited resources. While, the accumulation of noise poses a hindrance to execute this technique. The predicament is especially pronounced by dint of the exponential growth of noise with the number of multiplications.
Quantum computing has garnered much attention recently inasmuch as its momentous influence not only on data processing, but also on information protection. An intriguing field of study in relation to the security hazard is Quantum Public-Key Encryption (QPKE). The core approach entails the production of one-way functions to generate a quantum state that plays the role of a public key for encrypting message. QPKE is impeded mainly by necessitating sizable quantum operations, which falls into the hurdle of scaling up quantum computers.
Quantum Homomorphic Encryption (QHE) is another research area that has become increasingly appealing to safeguard data manipulation. Typically, an encrypted computation is exercised with a fault-tolerant Clifford+T circuit. Explicitly, physical qubits outnumber logical qubits by at least several hundred times, refuting the accessibility of QHE. An alternative rephrases a present HE to its quantum version. Aside from receiving the demerits of HE schemes aforesaid, the method in view consumes numerous qubits and then encounters the scalability barrier of quantum computers.
A serial of episodes elucidates a structure called the Quotient Algebra Partition, QAP, universally existing in finite-dimensional unitary Lie algebras. Given this structure inherited by every stabilizer code, a general methodology of Fault Tolerance Quantum Computation in QAP, abbreviated as QAPFTQC, elicits an algorithmic procedure achieving the acquirement that every action in every error-correcting code is fault tolerant. A fault tolerance quantum computation is thence derived by applying this encode on the codeword.

SUMMARY OF THE INVENTION

Accordingly, inventors of the present inventive concept introduce a system for secure multi-party exact homomorphic encryption and a computer-implemented method for performing secure multi-party exact homomorphic encryption.
The present inventive concept provides a system for secure multi-party exact homomorphic encryption (SMPEHE), wherein the system comprises a first participant as a model provider/data receiver, a second participant as a data provider/data owner and a third participant as a computation provider, wherein the system further comprises a key generation module, a message encryption module and a computation module.
The key generation module is within the first participant, which is configured to produce an encryption mapping comprising an ordered product of elementary gates; to generate a multivariate polynomial set, serving as a public encryption key, via the encryption mapping; to form an encryption operator serving as a private key; and to create an encrypted polynomial set representing a computational instruction based on an encrypted action.
The message encryption module is within the second participant, which is configured to encode a plaintext message into a first ciphertext by the public key provided by the first participant; and to transmit the first ciphertext to the third participant.
The computation module is within the third participant, which is configured to receive the first ciphertext; and to perform a computation on the received first ciphertext by evaluating the encrypted polynomial set.
According to the present inventive concept, the computation module is further configured to output a second ciphertext; and to transmit the second ciphertext to the first participant.

According to the present inventive concept, the system further comprises a decryption module within the first participant, which is configured to decrypt the second ciphertext by using the private key to retrieve a computation result.

According to the present inventive concept, the encryption mapping is generated by combining elementary gates, including negation, Toffoli, CNOT, and multi-controlled gates, to form an encryption transformation.

According to the present inventive concept, the public encryption key is a multivariate polynomial set generated through the corresponding encryption mapping.

According to the present inventive concept, the encrypted polynomial set is generated by the encrypted action composed of a desired operation, the encryption mapping and the encryption operator, and wherein the polynomial set is used for performing computations on the first ciphertext.

According to the present inventive concept, the computation module evaluates the encrypted polynomial set in parallel or sequentially on the first ciphertext to produce the second ciphertext.

According to the present inventive concept, the first ciphertext transmitted by the second participant is a tensor-product state of multiple individual ciphertexts.

According to the present inventive concept, the encrypted polynomial set is generated from an encrypted action which is defined as:

$$\mathcal{U}_{cv}^{(j)} = (\mathcal{R}_{en,j}^{-1} \otimes I_{n_j - w_j}) M_j \mathcal{R}_{cv,j},$$

where $\mathcal{R}_{en,j}$ and $\mathcal{R}_{cv,j}$ are the encryption transformations, $\mathcal{R}_{en,j}^{-1}$ is the inverse of $\mathcal{R}_{en,j}$, $M_j$ is the operation comprising elementary gates and $I_{n_j-w_j}$ is an identity operator of $n_j - w_j$ qubits.

According to the present inventive concept, a circuit of each of the encrypted action $\mathcal{U}_{cv}^{(j)}$ is further divided into a number $j_t$ of sections for positive integers $j_t$ and $t$ to generate refined encrypted polynomial sets.

According to the present inventive concept, there is a first communication between the first participant and the second participant, wherein the first communication occurs in parallel or sequentially, which includes the distribution of public encryption keys from the first participant to the second participant.

According to the present inventive concept, there is a second communication between the first participant and the third participant, wherein the second communication occurs in parallel or sequentially.

According to the present inventive concept, the second communication includes the transmission of the computation instruction from the first participant to the third participant; and the transmission of the second ciphertext from the third participant to the first participant.

According to the present inventive concept, there is a third communication between the second participant and the third participant wherein the third communication occurs in parallel or sequentially, which includes the distribution of the first ciphertext from the second participant to the third participant.

The present inventive concept further provides a computer-implemented method for performing secure multi-party exact homomorphic encryption (SMPEHE) involving a first participant as a model provider/data receiver, a second participant as data provider/a data owner and a third participant as a computation provider, wherein the method comprises:

S10. randomly selecting $E \leq D$ members from a group of $D$ parties in the first participant;

S20. generating $E$ independent key pairs, wherein each of the independent key pairs comprises, for $j = 1, 2, \cdots, E$: a public encryption key $\mathcal{P}_{w_j, k_j}(\mathcal{R}_{en,j}; \boldsymbol{x}_j)$, a multivariate polynomial set generated by an encryption mapping $\mathcal{R}_{en,j}$; and a private key $\mathcal{R}_{en,j}$, corresponding to the public key;

S30. preparing $E$ operations $M_j$ of $n$ qubits, wherein each of the operation $M_j$ is composed of elementary gates;

S40. generating $E$ encryption transformations $\mathcal{R}_{cv,j}$ of $n$ qubits, wherein each of the encryption transformation $\mathcal{R}_{cv,j}$ composed of elementary gates;

S50. creating $E$ encrypted polynomial sets $\mathcal{P}_{n_j, w_j}(\mathcal{U}_{cv}^{(j)}; \boldsymbol{z}_j)$ based on the j-th encrypted action $\mathcal{U}_{cv}^{(j)} = (\mathcal{R}_{en,j}^{-1} \otimes I_{n_j-w_j}) M_j \mathcal{R}_{cv,j}$, where $M_j$ is a desired operation of the j-th member, $\mathcal{R}_{en,j}^{-1}$ is an inverse of $\mathcal{R}_{en,j}$ and $I_{n_j-w_j}$ is an identity operator for $n_j - w_j$ qubits;

S60. publicizing a set of public keys $\{\mathcal{P}_{w_j,k_j}(\mathcal{R}_{en,j}; \boldsymbol{x}_j): j = 1,2, \cdots, E\}$; and

S70. transmitting an encrypted polynomial set $\left\{\mathcal{P}_{n_j,w_j}(\mathcal{U}_{cv}^{(j)}; \boldsymbol{z}_j): j = 1,2,\cdots,E\right\}$ to the third participant.

According to the present inventive concept, the method further comprises , for $j = 1,2, \cdots, E$:

S80. preparing $E$ plaintext messages $\boldsymbol{m}_j \in Z_2^{k_j}$ , each of which represented as a $k_j$-qubit state, where $k_j \leq w_j$;

S90. encrypting each of the plaintext $\boldsymbol{m}_j$ into a first ciphertext $\boldsymbol{c}_j$ using the corresponding public key $\mathcal{P}_{w_j,k_j}(\mathcal{R}_{en,j}; \boldsymbol{x}_j)$;

S100. creating a tensor-product state of the ciphertexts $|\boldsymbol{c}\rangle = |\boldsymbol{c}_1\rangle \otimes |\boldsymbol{c}_2\rangle \otimes \cdots \otimes |\boldsymbol{c}_E\rangle$; and

S 110. transmitting the tensor-product the ciphertext state $|\boldsymbol{c}\rangle$ to the third participant.

According to the present inventive concept, the method further comprises:

S120. distributing the encrypted polynomial sets $\left\{\mathcal{P}_{n_j,w_j}(\mathcal{U}_{cv}^{(j)}; \boldsymbol{z}_j): j = 1,2,\cdots,E\right\}$ among L independent third participants;

S130. evaluating each of the encrypted polynomial set $\mathcal{P}_{n_j,w_j}(\mathcal{U}_{cv}^{(j)}; \boldsymbol{z}_j)$ on an input $|\bar{\boldsymbol{c}}_j\rangle = |\boldsymbol{c}_j\rangle \otimes |\boldsymbol{0}_{n_j\text{-}w_j}\rangle$, where $|\boldsymbol{0}_{n_j\text{-}w_j}\rangle$ is a null state of $n_j$ - $w_j$ qubits;

S140. generating the second ciphertexts $|\boldsymbol{s}\rangle = |\boldsymbol{s}_1\rangle \otimes |\boldsymbol{s}_2\rangle \otimes \cdots \otimes |\boldsymbol{s}_E\rangle$; and

S150. transmitting the second ciphertexts $|\boldsymbol{s}\rangle$ to the first participant.

According to the present inventive concept, the method further comprises:

S160. decrypting each of the second ciphertext $|\boldsymbol{s}_j\rangle$ using the corresponding private key $\mathcal{R}_{cv,j}$ to recover computation outcomes.

According to the present inventive concept, each of the encryption mapping $\mathcal{R}_{en,j}$ is composed of elementary gates selected from the group consisting of negation, Toffoli, CNOT, and multi-controlled gates.

According to the present inventive concept, each of the public key $\mathcal{P}_{w_j,k_j}(\mathcal{R}_{en,j}; \boldsymbol{x}_j)$ is generated by applying the encryption mapping $\mathcal{R}_{en,j}$ to an initial polynomial set containing linear and nonlinear polynomials.

According to the present inventive concept, the encrypted polynomial sets $\mathcal{P}_{n_j,w_j}\left(\mathcal{U}_{cv}^{(j)}; \boldsymbol{z}_j\right)$ encode computation instructions for operations performed by the third participant.

According to the present inventive concept, each of the first ciphertext $\boldsymbol{c}_j$ is generated by evaluating the public key $\mathcal{P}_{w_j,k_j}(\mathcal{R}_{en,j}; \boldsymbol{x}_j)$ on the plaintext message $\boldsymbol{m}_j$, producing a bit-length $k_j \leq w_j$.

According to the present inventive concept, the tensor-product state of the first ciphertexts is transmitted securely to the third participant without revealing the plaintext messages.

According to the present inventive concept, the encrypted polynomial sets are evaluated independently or sequentially on the first input ciphertext to optimize computational efficiency.

According to the present inventive concept, the private key $\mathcal{R}_{cv,j}$ is used to decrypt the second ciphertexts.

According to the present inventive concept, the method further comprises distributing the public encryption keys from the first participant to the second participant in parallel or sequentially.

According to the present inventive concept, the method further comprises:

transmitting computation instructions from the first participant to the third participant in parallel or sequentially; and transmitting the second ciphertexts from the third participant to the first participant in parallel or sequentially.

According to the present inventive concept, the method further comprises: transmitting the first ciphertexts from the second participant to the third participant in parallel or sequentially.

BRIEF DESCRIPTION OF THE DRAWINGS

FIG. 1 is a process diagram of EHE according to an embodiment of the present inventive concept;
FIG. 2 is a process diagram of SMPEHE according to an embodiment of the present inventive concept;
FIG. 3 is a schematic diagram of the elementary gate used in the algorithm according to the present inventive concept;
FIG. 4 shows (a) the process of an embodiment of the present inventive concept where the message and computation are mapped to an identical space; and (b) the process of another embodiment of the present inventive concept that the message and computation are mapped to different spaces of encryption;
FIG. 5 is a schematic flow diagrams according to an embodiment of the present inventive concept;
FIG. 6 is a schematic flow diagrams according to another embodiment of the present inventive concept; and
FIG. 7 is a schematic flow diagrams according to another embodiment of the present inventive concept.

DETAILED DESCRIPTION

The present inventive concept is described by the following specific embodiments. Those with ordinary skills in the arts can readily understand other advantages and functions of the present inventive concept after reading the disclosure of this specification. Any changes or adjustments made to their relative relationships, without modifying the substantial technical contents, are also to be construed as within the range implementable by the present inventive concept.

Moreover, the word "exemplary" or "embodiment" is used herein to mean serving as an example, instance, or illustration. Any aspect or design described herein as exemplary or an embodiment is not necessarily to be construed as preferred or advantageous over other aspects or designs. Rather, use of the word "exemplary" or "embodiment" is intended to present concepts and techniques in a concrete fashion.

As used in this application, the term "or" is intended to mean an inclusive "or" rather than an exclusive "or." That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more," unless specified otherwise or clear from context to be directed to a singular form.

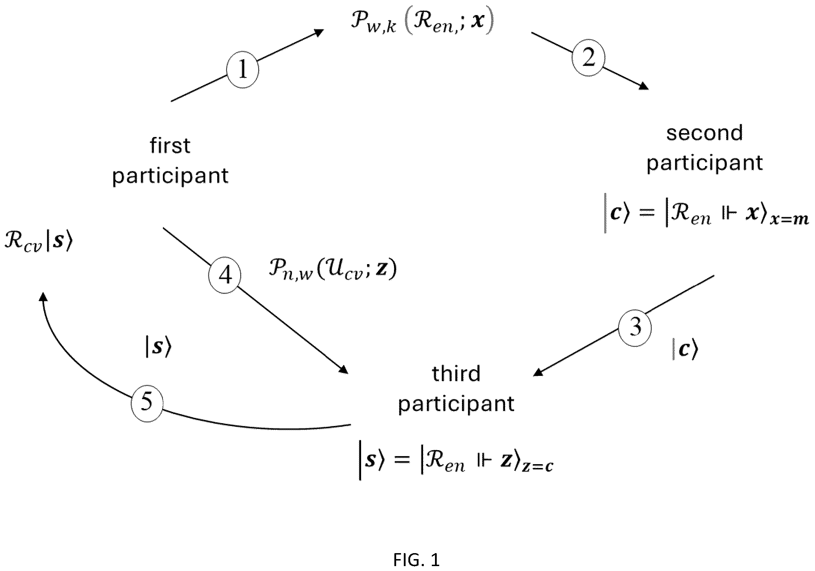

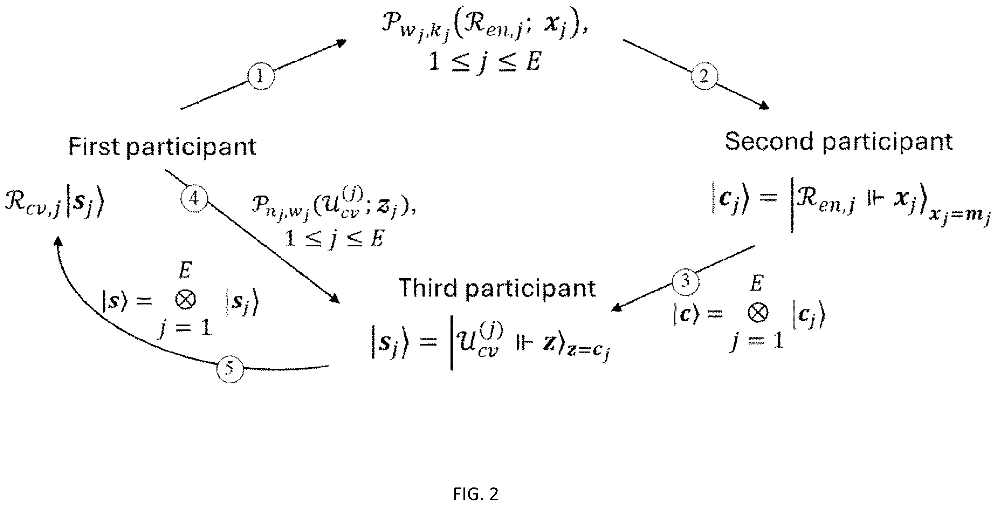

Please refer to FIGs. 1 and 2 which is a process diagram of exact homomorphic encryption, EHE, and a process of secure multi-party exact homomorphic encryption, SMEHE, according to an embodiment of the method of the present inventive concept.

The present inventive concept provides a system for SMPEHE, wherein the system may comprise a first participant as a model provider/data receiver, a second participant as a data provider/data owner and a third participant as a computation provider, and the system may further comprise a key generation module, a message encryption module and a computation module.

According to the present inventive concept, the key generation module may be within the first participant, which is configured to produce an encryption mapping comprising an ordered product of elementary gates; to generate a multivariate polynomial set, serving as a public encryption key, via the encryption mapping; to form an encryption operator serving as a private key; and to create an encrypted polynomial set representing a computational instruction based on an encrypted action.

According to the present inventive concept, the message encryption module may be within the second participant, which is configured to encode a plaintext message into a first ciphertext by the public key provided by the first participant; and to transmit the first ciphertext to the third participant.

According to the present inventive concept, the computation module may be within the third participant, which is configured to receive the first ciphertext; and to perform a computation on the received first ciphertext by evaluating the encrypted polynomial set.

According to the present inventive concept, the computation module may be further configured to output a second ciphertext; and to transmit the second ciphertext to the first participant.

According to the present inventive concept, the system may further comprise a decryption module within the first participant, which is configured to decrypt the second ciphertext by using the private key to retrieve a computation result.

According to the present inventive concept, the encryption mapping may be generated by combining elementary gates, including negation, Toffoli, CNOT, and multi-controlled gates, to form an encryption transformation.

According to the present inventive concept, the public encryption key may be a multivariate polynomial set generated through the corresponding encryption mapping.

According to the present inventive concept, the encrypted polynomial set may be generated by the encrypted action composed of a desired operation, the encryption mapping and the encryption operator, and wherein the polynomial set may be used for performing computations on the first ciphertext.

According to the present inventive concept, the computation module may evaluate the encrypted polynomial set in parallel or sequentially on the first ciphertext to produce the second ciphertext.

According to the present inventive concept, the first ciphertext transmitted by the second participant may be a tensor-product state of multiple individual ciphertexts.

According to the present inventive concept, a circuit of each of the encrypted action $\mathcal{U}_{cv}^{(j)}$ is further divided into a number $j_t$ of sections for positive integers $j_t$ and $t$ to generate refined encrypted polynomial sets.

According to the present inventive concept, there is a first communication between the first participant and the second participant, wherein the first communication occurs in parallel or sequentially, which includes the distribution of public encryption keys from the first participant to the second participant.

According to the present inventive concept, there is a second communication between the first participant and the third participant, wherein the second communication occurs in parallel or sequentially.

According to the present inventive concept, the second communication includes the transmission of the computation instruction from the first participant to the third participant; and the transmission of the second ciphertext from the third participant to the first participant.

According to the present inventive concept, there is a third communication between the second participant and the third participant wherein the third communication occurs in parallel or sequentially, which includes the distribution of the first ciphertext from the second participant to the third participant.

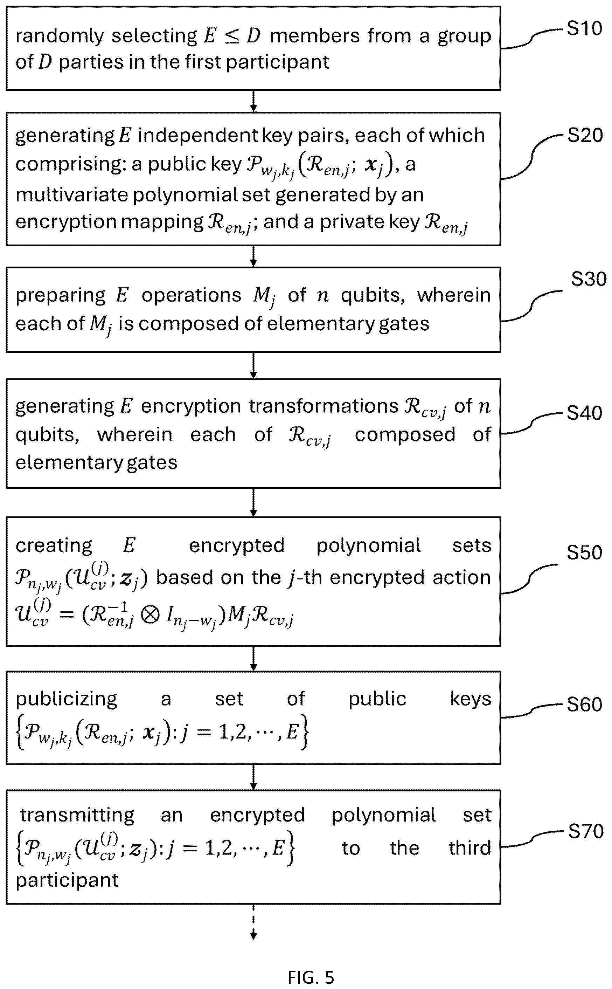

Please refer to FIG. 5, which is a schematic flow diagrams according to an embodiment of the present inventive concept, along with FIGs. 1 and 2,. The present inventive concept further provides a computer-implemented method for performing secure multi-party exact homomorphic encryption (SMPEHE) involving a first participant as a model provider/data receiver, a second participant as data provider/a data owner and a third participant as a computation provider, wherein the method may comprise:

S10. randomly selecting $E \leq D$ members from a group of $D$ parties in the first participant;

S20. generating E independent key pairs, wherein each of the independent key pairs comprises, for $j = 1,2, \cdots, E$ : a public encryption key $\mathcal{P}_{w_j,k_j}(\mathcal{R}_{en,j}; \boldsymbol{x}_j)$, a multivariate polynomial set generated by an encryption mapping $\mathcal{R}_{en,j}$ ; and a private key $\mathcal{R}_{en,j}$ , corresponding to the public key;

S30. preparing E operations $M_j$ of $n$ qubits, wherein each of the operation $M_j$ is composed of elementary gates;

S40. generating E encryption transformations $\mathcal{R}_{cv,j}$ of $n$ qubits, wherein each of the encryption transformation $\mathcal{R}_{cv,j}$ composed of elementary gates;

S50. creating E encrypted polynomial sets $\mathcal{P}_{n_j,w_j}(\mathcal{U}_{cv}^{(j)}; \boldsymbol{z}_j)$ based on the $j$-th encrypted action $\mathcal{U}_{cv}^{(j)} = (\mathcal{R}_{en,j}^{-1} \otimes I_{n_j-w_j})M_j\mathcal{R}_{cv,j}$ , where $M_j$ is a desired operation of the $j$-th member, $\mathcal{R}_{en,j}^{-1}$ is an inverse of $\mathcal{R}_{en,j}$ and $I_{n_j-w_j}$ is an identity operator for $n_j - w_j$ qubits;

S60. publicizing a set of public encryption keys $\{\mathcal{P}_{w_j,k_j}(\mathcal{R}_{en,j}; \boldsymbol{x}_j): j = 1,2, \cdots, E\}$; and

S70. transmitting an encrypted polynomial set $\left\{\mathcal{P}_{n_j,w_j}(\mathcal{U}_{cv}^{(j)}; \boldsymbol{z}_j): j = 1,2, \cdots, E\right\}$ to the third participant.

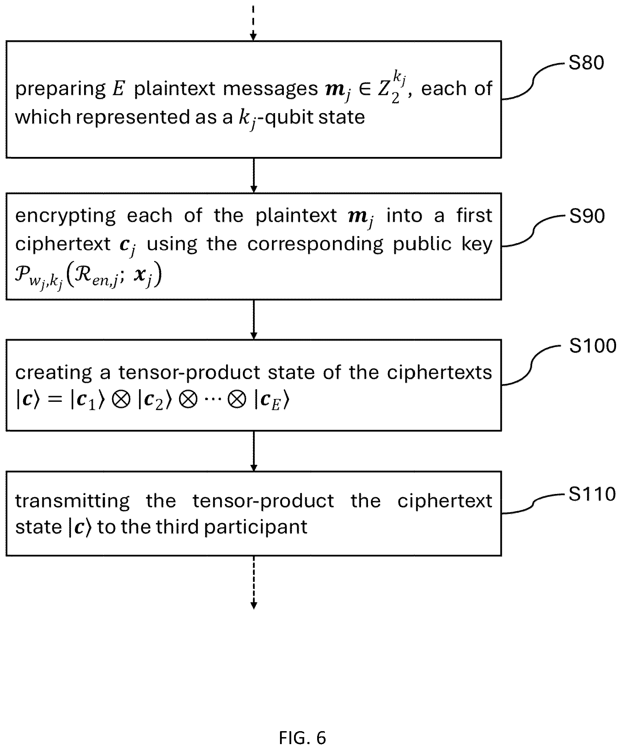

Please refer to FIG. 6, which is a schematic flow diagrams according to an embodiment of the present inventive concept, along with FIGs. 1 and 2,. According to the present inventive concept, the method further comprises, for $j = 1,2, \cdots, E$:

S80. preparing E plaintext messages $\boldsymbol{m}_j \in Z_2^{k_j}$ , each of which represented as a $k_j$-qubit state, where $k_j \leq w_j$, wherein $\boldsymbol{m}_j$ may be the plaintext of the j-th member;

S90. encrypting each of the plaintext $\boldsymbol{m}_j$ into a first ciphertext $\boldsymbol{c}_j$ using the corresponding public key $\mathcal{P}_{w_j,k_j}(\mathcal{R}_{en,j};$

$\boldsymbol{x}_j$);

S100. creating a tensor-product state of the ciphertexts $|\boldsymbol{c}\rangle = |\boldsymbol{c}_1\rangle \otimes |\boldsymbol{c}_2\rangle \otimes \cdots \otimes |\boldsymbol{c}_E\rangle$; and

S110. transmitting the tensor-product the ciphertext state $|\boldsymbol{c}\rangle$ to the third participant.

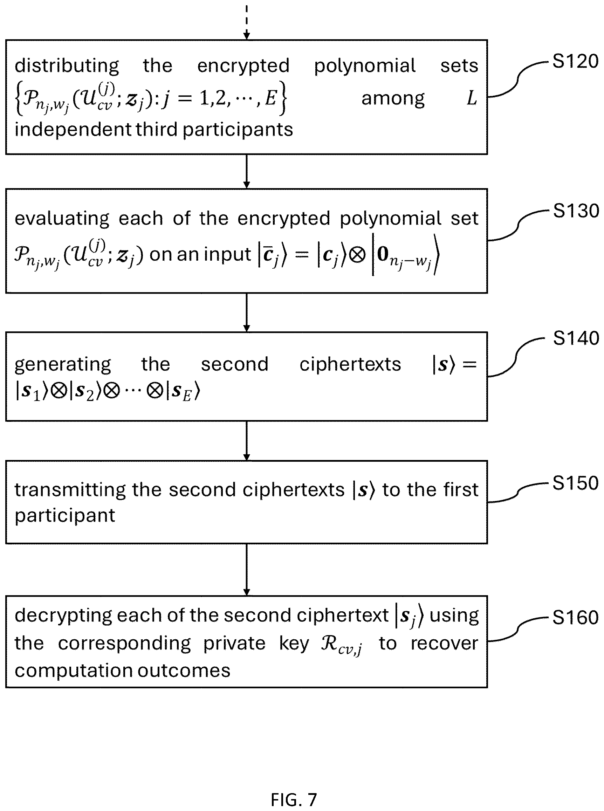

Please refer to FIG. 7, which is a schematic flow diagrams according to an embodiment of the present inventive concept. According to the present inventive concept, the method further comprises:

S120. distributing the encrypted polynomial sets $\left\{ \mathcal{P}_{n_j,w_j}(\mathcal{U}_{cv}^{(j)}; \boldsymbol{z}_j) : j = 1, 2, \cdots, E \right\}$ among L independent third participants;

S130. evaluating each of the encrypted polynomial set $\mathcal{P}_{n_j,w_j}(\mathcal{U}_{cv}^{(j)}; \boldsymbol{z}_j)$ on an input $|\bar{\boldsymbol{c}}_j\rangle = |\boldsymbol{c}_j\rangle \otimes |\boldsymbol{0}_{n_j-w_j}\rangle$, where $|\boldsymbol{0}_{n_j-w_j}\rangle$ is a null state of $n_j - w_j$ qubits, , wherein $|\boldsymbol{c}_j\rangle$ may be the ciphertext of the j-th member for IME;

S140. generating the second ciphertexts $|\boldsymbol{s}\rangle = |\boldsymbol{s}_1\rangle \otimes |\boldsymbol{s}_2\rangle \otimes \cdots \otimes |\boldsymbol{s}_E\rangle$, wherein $|\boldsymbol{s}\rangle$ may be the ciphertext of cryptovaluation; and

S150. transmitting the second ciphertexts $|\boldsymbol{s}\rangle$ to the first participant.

Please further refer to FIG. 7, along with FIGs. 1 and 2. According to the present inventive concept, the method further comprises:

S160. decrypting each of the second ciphertext $|\boldsymbol{s}_j\rangle$ using the corresponding private key $\mathcal{R}_{cv,j}$ to recover computation outcomes. The second ciphertext $|\boldsymbol{s}_j\rangle$ may be the ciphertext of j-th member in the cryptovaluation.

According to the present inventive concept, each of the encryption mapping $\mathcal{R}_{en,j}$ is composed of elementary gates selected from the group consisting of negation, Toffoli, CNOT, and multi-controlled gates.

According to the present inventive concept, each of the public key $\mathcal{P}_{w_j,k_j}(\mathcal{R}_{en,j}; \boldsymbol{x}_j)$ is generated by applying the encryption mapping $\mathcal{R}_{en,j}$ to an initial polynomial set containing linear and nonlinear polynomials.

According to the present inventive concept, the encrypted polynomial sets $\mathcal{P}_{n_j,w_j}\left(\mathcal{U}_{cv}^{(j)}; \boldsymbol{z}_j\right)$ encode computation instructions for operations performed by the third participant, as shown in FIG. 2.

According to the present inventive concept, each of the first ciphertext $\boldsymbol{c}_j$ is generated by evaluating the public encryption key $\mathcal{P}_{w_j,k_j}(\mathcal{R}_{en,j}; \boldsymbol{x}_j)$ on the plaintext message $\boldsymbol{m}_j$, producing a bit-length $k_j \leq w_j$, as show in FIG. 2.

According to the present inventive concept, the tensor-product state of the first ciphertexts is transmitted securely to the third participant without revealing the plaintext messages.

According to the present inventive concept, the encrypted polynomial sets are evaluated independently or sequentially on the first input ciphertext to optimize computational efficiency.

According to the present inventive concept, the private key $\mathcal{R}_{cv,j}$ is used to decrypt the second ciphertexts.

According to the present inventive concept, the method further comprises distributing the public encryption keys from the first participant to the second participant in parallel or sequentially.

According to the present inventive concept, the method further comprises:

transmitting computation instructions from the first participant to the third participant in parallel or sequentially; and transmitting the second ciphertexts from the third participant to the first participant in parallel or sequentially.

According to the present inventive concept, the method further comprises: transmitting the first ciphertexts from the second participant to the third participant in parallel or sequentially.

Please refer to FIG. 1 which is a process diagram of EHE according to an embodiment of the present inventive concept. The process begins when ○,1 the first participant produces a public key $\mathcal{P}_{w,k}(\mathcal{R}_{en,}; \boldsymbol{x})$ and releases this key, after which ○,2 the second participant takes the public key to encode an message $\boldsymbol{m}$ into the ciphertext $\boldsymbol{c}$.

Then, ○,3 The ciphertext c is then sent to the third participant from the second participant. Subsequently, ○,4 the first participant provides the computation instructions/model $\mathcal{P}_{n,w}(\mathcal{U}_{cv}; \boldsymbol{z})$ to the third participant for further processing. Once the computations are performed, ○,5 the resulting ciphertext s is sent back to the first participant by the third participant. Finally, the first participant decrypts the computation result s via the private key $\mathcal{R}_{cv}$ to obtain the final output of the process.

Please refer to FIG. 2 which is a process diagram of SMPEHE according to an embodiment of the present inventive concept.

According to this embodiment, the process starts with ○,1 the first participant produces a public key {

$\mathcal{P}_{w_j, k_j} (\mathcal{R}_{en, j} ; \boldsymbol{x}_j)$: $j = 1, 2, \cdots, E$} and releases the public key. Next, ○,2 The second participant encodes the $j$-th message $\boldsymbol{m}_j$ into the ciphertext $\boldsymbol{c}_j$ by using the public key.

After that , ○,3 the aggregated ciphertext c is then transmitted from the second participant to the third participant. Subsequently, ○,4 the first participant provides the computation instructions/model

$$\{\mathcal{P}_{n_j, w_j} \left( \mathcal{U}_{cv}^{(j)}; \boldsymbol{z}_j \right) : j = 1, 2, \cdots, E\}$$ to the third participant for execution.

Finally, ○,5 the third participant sends the computation result ciphertext $|\boldsymbol{s}\rangle = \overset{E}{\underset{j=1}{\otimes}} |\boldsymbol{s}_j\rangle$ back to the first participant, and the $j$-th component $|\boldsymbol{s}_j\rangle$ is decrypted into the corresponding $j$-th component of the computation result via the private key $\mathcal{R}_{cv,j}$ .

According to an embodiment of the present inventive concept, a multivariate polynomial of $k$ variables $f(x) = \sum_{\tau \in Z_2^k} c_\tau x^\tau$ may be provided, wherein $f(x)$ is a linear combination of monomials $x^\tau$ of degrees $\leq k$ with coefficients $c_\tau \in Z_2$. Each monomial $x^\tau$ may be expressed as $x^\tau = x_1^{\sigma 1} x_2^{\sigma 2} \cdots x_k^{\sigma k}$, where $x_r \in Z_2, \tau = \sigma_1 \sigma_2 \cdots \sigma_r \cdots \sigma_k \in Z_2^k$ and r $E$ [k], with [k] denoting a set of positive integers from 1 to $k$.

In this embodiment, the formulation provides the foundational representation of polynomials in the binary field $Z_2$.

The polynomial $f(x)$ may serve as the foundation for encoding and transforming data in the EHE framework in the system of the present inventive concept, where public encryption keys are generated as multivariate polynomial sets.

According to an embodiment of the present inventive concept, elementary gates $\Lambda_r^\theta$ of $k$ qubits are introduced, where the integer r signifies the r-th qubit as a target qubit of the elementary gate, and nonzero entities of $k$-bit binary string $\theta = \epsilon_1 \epsilon_2 \cdots \epsilon_k \in Z_2^k$ indicate positions of qubits serving as control bits.

In this embodiment, the elementary gates may act on k-qubit quantum states and the gates may be represented by the transformation $\Lambda_r^\theta$ , wherein $r$ may identify the target qubit and $\theta = \epsilon_1 \epsilon_2 \cdots \epsilon_k \in Z_2^k$ may specify the control bits.

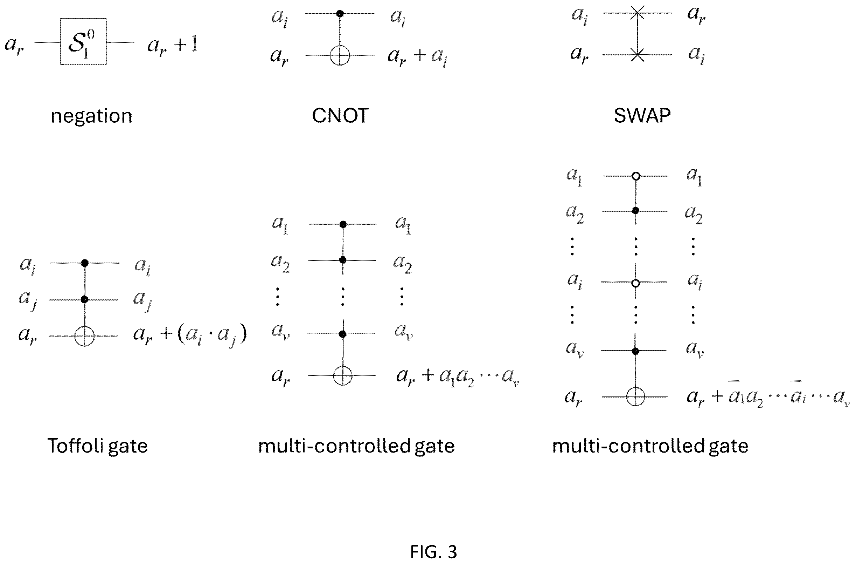

In this embodiment, the elementary gates may comprise the negation gates, the controlled-NOT, CNOT, gates, Toffoli gates, and multi-controlled gates as shown in FIG 3.

Every elementary gate is a transformation of dimension-one preserving that maps a basis quantum state into another, referring to FIG. 3 for the diagrammatic exemplification. Since AND and OR can be rephrased in Toffoli gates attended with ancilla qubits, this set vouches for the computational universality. These gates may operate on quantum states to enable transformations within the EHE framework.

Each of elementary gates used in the present inventive concept is designed to be dimension-one preserving, avoiding the memory-intensive demands associated with simulating full quantum states. This design may support the feasibility of implementing the system on classical computing platforms, such as CPUs and GPUs, without the need for quantum hardware.

According to an embodiment of the present inventive concept, elementary gates are applied on quantum states. In this embodiment, elementary gates may act on the variables to generate multivariate polynomials over a binary field $Z_2$, formulated as the following transformation rule,

$$\Lambda_r^\theta \Vdash x_s = x_s + \delta_{rs} x^\theta \dots \text{Eq. 1}$$

wherein $x_s \in Z_2$ is a binary variable and $x^\theta = x_1^{\epsilon_1} x_2^{\epsilon_2} \cdots x_k^{\epsilon_k}$ represents the monomial transformation of k variables which induced by the gate.

According to an embodiment of the present inventive concept, a first encryption mapping $\mathcal{R}_{en}$ may be defined, which is an ordered product of elementary gates randomly chosen. The first encryption operator $\mathcal{R}_{en}$ is applied to generate a set of w multivariate polynomials that serves as a public encryption key for encoding a k-qubit plaintext into a w-qubit first ciphertext, where $w \geq k$, for message encryption.

The first encryption mapping is constructed to encode plaintext into ciphertext by applying transformations to the input polynomials. According to the precent inventive concept, the output may be a set of w-multivariate polynomials, which may form a public encryption key.

The transformation rule described in Eq. 1 de facto unveils the polynomial representation of elementary gates. When this mapping is applied, the variable $x_s$ receives a shift of the product $x^\theta$ if the s-th qubit corresponds to the target bit, or remains intact otherwise. In practical maneuvers, the elementary gates act on variables of monomials. The gate $\Lambda_r^\theta$ is said to be of *rank t* if $\theta$ contains a number *t* of nonzero bits. That is, a negation gate is of rank zero, a CNOT gate is of rank one, a Toffoli gate is rank two, and a multi-controlled gate is of *rank t* $\geq$ 3. Every elementary gate defined here is unitary and involutory.

According to an embodiment of the present inventive concept, a desired operation M of n qubits are introduced, where n > w, and M is represented as a circuit composed of n-qubit elementary gates. In this embodiment, the operation M may serve as the computation to be encrypted and performed homomorphically.

According to an embodiment of the present inventive concept, a second encryption mapping $\mathcal{R}_{cv}$ is defined, wherein $\mathcal{R}_{cv}$ is an ordered product of *n*-qubit elementary gates randomly chosen. The second encryption mapping $\mathcal{R}_{cv}$ may introduce cryptographic complexity.

According to an embodiment of the present inventive concept, the desired operation M may be encoded into an encrypted action *U*, wherein the desired operation *M* is cryptified into an encrypted action *U* through the first encryption operator $\mathcal{R}_{en}$ and the second encryption operator $\mathcal{R}_{cv}$. The process may ensure that the operation M is transformed into a secure, encrypted form compatible with ciphertext computations.

According to an embodiment of the present inventive concept, an encrypted polynomial set is generated from the encrypted action U, and the encrypted polynomial set may be evaluated on the ciphertext to yield an encrypted computation.

According to an embodiment of the present inventive concept, the encrypted action U may enable computations to be performed in the encrypted domain. The polynomial sets may serve as intermediaries to evaluate encrypted operations.

The computation can be performed homomorphically without decrypting the ciphertext by the system of the present inventive concept. The evaluation process, referred to as cryptovaluation, may establish the duality between polynomial evaluation and state computation, thereby validating the integrity of the encrypted computation.

According to an embodiment of the present inventive concept, a second binary string $\zeta$ is introduced, wherein the second binary string $\zeta$ determines how variables interact within the monomial. The monomial $\boldsymbol{x}^\theta$ may be modified based on the second binary string $\zeta$ into a modified form $\bar{x}_\zeta^\theta$. Consequently, the Eq. 1 may be expanded into the following generalized transformation:

$$\Lambda_r^{\theta,\zeta} \Vdash x_s = x_s + \delta_{rs}\bar{x}_\zeta^\theta \;...\mathrm{Eq.}\; 2$$

where $s \in [k]$ and $\bar{x}_\zeta^\theta$ is defined as $\bar{x}_\zeta^\theta = \prod_{i=1}^k (x_i + \varsigma_i)^{\epsilon_i}$.

In this embodiment, the second binary string $\zeta$ is used to modify the monomial interactions through control bits introducing an additional degree of freedom in variable transformations.

According to an embodiment of the present inventive concept, the monomial $\boldsymbol{x}^\theta$ may be transformed into the modified form $\bar{x}_\zeta^\theta$, defined as

$$\bar{x}_\zeta^\theta = \prod_{i=1}^k (x_i + \varsigma_i)^{\epsilon_i},$$

where $x_i \in Z_2$ may represent the variables, $\zeta_i \in Z_2$ may modify the interaction for each variable based on its binary value, and $\varepsilon_i$ may determine the control bit configuration.

According to the present inventive concept, the most general form of an elementary gate acting on *k* variables over $Z_2$ may be expressed in Eq. 2.

According to the present inventive concept, the generalization of Eq. 1 into Eq. 2 enhances the transformation rule by incorporating the second binary string $\zeta$.

According to the present inventive concept, the generalization may support more complex polynomial transformations and improve the framework's ability in the system of the present inventive concept to represent and process non-linear relationships in the encrypted polynomial sets.

According to an embodiment of the present inventive concept, the first encryption operator $\mathcal{R}_{en}$ may be further defined as a product operation $\mathcal{R}$ which is a k-qubit ordered product of elementary gates, as:

$$\mathcal{R} = \prod_{i=1}^{n} \Lambda_{r_i}^{\theta_i},$$

where $\Lambda_{r_i}^{\theta_i}$ denotes the *i*-th elementary gate acting on the $r_i$-th qubit with a control string $\theta_i \in \mathbb{Z}_2^k$ .

According to the present inventive concept, the control string $\theta_i \in \mathbb{Z}_2^k$ may specify which qubits interact during the operation.

According to the present inventive concept, the ordered product $\mathcal{R}$ may encapsulate the sequential application of these gates to transform plaintext states into encrypted representations.

According to the present inventive concept, the use of elementary gates, e.g., the negation, the CNOT, Toffoli gates, may be used as the building blocks of encryption mappings.

According to an embodiment of the present inventive concept, a reverse product operation $\widehat{\mathcal{R}}$ may be further defined, wherein $\widehat{\mathcal{R}}$ is the order-reversed product of $\mathcal{R}$ , which is expressed as:

$$\widehat{\mathcal{R}} = \prod_{i=n}^{1} \Lambda_{r_i}^{\theta_i}.$$

In this embodiment, the reverse operation may ensure symmetry and facilitates invariance properties that are essential for encryption and decryption processes within the SMPEHE framework of the system of the present inventive concept.

According to an embodiment of the present inventive concept, an equality may be established between the product operation $\mathcal{R}$ and its reverse $\widehat{\mathcal{R}}$ for each basis state $|x\rangle$:

$$|\mathcal{R} \Vdash x\rangle = \widehat{\mathcal{R}}|x\rangle \dots \text{Eq. 3, }$$

where $x \in \mathbb{Z}_2^k$.

According to the present inventive concept, an elementary gate of *k* qubits $\Lambda_r^\theta$ sends a basis state of the same number of qubits $|a_1 a_2 \cdots a_r \cdots a_k\rangle$ to

$$\Lambda_r^\theta |a_1 a_2 \cdots a_r \cdots a_k\rangle = |a_1 a_2 \cdots (a_r + a^\theta) \cdots a_k\rangle \dots \text{Eq. 2-1,}$$

where $r \in [k]$, $\theta = \varepsilon_1 \varepsilon_2 \cdots \varepsilon_k$ and $a^\theta = a_1^{\epsilon_1} a_2^{\epsilon_2} \cdots a_k^{\epsilon_k} \in Z_2^k$ .

The equality in Eq. 3 is deemed as the evaluation duality between a state and its associated polynomials.

Specifically, $| \mathcal{R} \; \Vdash \; x\rangle = |y_1(x)y_2(x) \cdots y_k(x)\rangle$ indicates a sequence of ordered polynomials written in a state. The s-th polynomial, $y_s(x) = \mathcal{R} \Vdash x$, is the is the resulted polynomial of applying the product operation $\mathcal{R} = \Lambda_{r_u}^{\theta_u} \cdots \Lambda_{r_2}^{\theta_2} \Lambda_{r_1}^{\theta_1}$ embracing $u \geq 1$ elementary gates on the s-th variable $x_s$ of $x = x_1 x_2 \cdots x_k \in Z_2^k$, $s \in [k]$. The state $\widehat{\mathcal{R}} |x\rangle$ results from activating the order-reversed product $\widehat{\mathcal{R}} = \Lambda_{r_1}^{\theta_1} \Lambda_{r_2}^{\theta_2} \cdots \Lambda_{r_u}^{\theta_u}$ of $\mathcal{R}$ on the basis state $|x\rangle$. This equality elucidates the equivalence of the polynomial evaluation and the state computation, namely $| \mathcal{R} \Vdash x\rangle_{=a} = \widehat{\mathcal{R}} |a\rangle$ by substituting a multi-valued string $a$ for the input $x$ of polynomials $y_s(x)$ respectively. The validness of Eq. 3 is confirmed through a process that repetitively employs Eq. 1 to generate polynomial monomials and Eq. 2-1 to calculate state components.

The transformations applied by $\mathcal{R}$ and its reverse $\widehat{\mathcal{R}}$ may yield equivalent outcomes, independent of the order of gate application.

According to the present inventive concept, the sequential application of gates in $\mathcal{R}$ may introduce layers of cryptographic complexity by leveraging the noncommutative properties of elementary gates for enhanced security.

The equality $\mathcal{R} |x\rangle = \widehat{\mathcal{R}} |x\rangle$ establishes an invariant property that strengthens the theoretical foundation of the encryption process in the system of the present inventive concept.

According to an embodiment of the present inventive concept, an initial set of the multivariable polynomials $\mathcal{P}_{in}$ = $\{g_j(x)|j \in [w]\}$ is prepared, wherein $g_j(x)$ corresponds to each polynomial $f(x)$, wherein each of $g_j(x)$ is expressed as:

$$g_j(x) = \sum_{\tau \in Z_2^k} c_{\tau,j} x^\tau,$$

where $c_{\tau,j} \in Z_2$ are binary coefficients and $x^\tau = x_1^{\sigma_1} x_2^{\sigma_2} ... x_k^{\sigma_k}$ are monomials of degree $\leq k$.

In this embodiment, the polynomial set may be structured and compatible with subsequent encryption transformations, enabling the efficient computation in the SMPEHE framework in the system of the present inventive concept

According to an embodiment of the present inventive concept, the first encryption operator $\mathcal{R}_{en}$ is applied on each polynomial in the initial polynomial set $\mathcal{P}_{in}$. The resulting ordered set of polynomials is denoted as $\mathcal{P}_{w,k} (\mathcal{R}_{en} ; \boldsymbol{x})$ = $\{f_j(x) = \mathcal{R}_{en} \Vdash g_j(x): j \in [w]\}$, where $w \geq k$ is the number of the polynomials. This ordered set may serve as a public encryption key, as shown in FIG. 1.

In this embodiment, the first encryption operator $\mathcal{R}_{en}$ may transform each polynomial $g_j(x)$ in $\mathcal{P}_{in}$ into a corresponding encrypted polynomial $f_j(x)$. The transformation is expressed as: $f_j(x) = \mathcal{R}_{en} \Vdash g_j(x)$, $\forall_j \in [w]$.

The polynomials may be transformed into secure forms while retaining their structural consistency.

The algorithm favors the first encryption operator $\mathcal{R}_{en}$ including a certain number of multi-controlled gates of higher ranks $\geq 2$ for the purpose of breeding polynomials of higher degrees in $\mathcal{P}_{w,k} (\mathcal{R}_{en} ; x)$. In the composition of $\mathcal{R}_{en}$, a pair of gates $\Lambda_r^\theta$ and $\Lambda_s^\tau$ are noncommuting if the $r$-th digit in $\tau$ or the $s$-th digit in $\theta$ is non-null, $r$ and $s \in [k]$.

In this embodiment, the condition $w \geq k$ ensures sufficient encoding capacity for the plaintext. The set $\mathcal{P}_{w,k} (\mathcal{R}_{en} ; x)$ may serve as a reusable key for encoding plaintexts into ciphertexts.

According to an embodiment of the present inventive concept, the plaintext $|m\rangle$ may be provided, wherein the plaintext is of k qubits. The plaintext may be encoded to the first ciphertext $|c\rangle$, wherein the ciphertext is of w qubits. The ciphertext is generated by evaluating the public encryption $\mathcal{P}_{w,k} (\mathcal{R}_{en} ; \boldsymbol{x})$ on the plaintext, such that

$$|\boldsymbol{c}\rangle = |f_1(\boldsymbol{m})f_2(\boldsymbol{m}) ... f_w(\boldsymbol{m})\rangle,$$

where $m \in Z_2^k$, $c \in Z_2^w$ and $f_j(m) \in Z_2$ is the evaluation of the $j$-th polynomial $f_j(x) \in \mathcal{P}_{w,k} (\mathcal{R}_{en} ; x)$ on the plaintext, $1 \leq j \leq w$.

In this embodiment, the plaintext $|m\rangle$ may serve as the data to be encrypted using the EHE framework of the present inventive concept and the public encryption $\mathcal{P}_{w,k} (\mathcal{R}_{en} ; x)$ may serve as the functional basis for encoding the plaintexts into the ciphertexts. Specifically, the ciphertext $|c\rangle$ is the evaluation of the public key $\mathcal{P}_{w,k} (\mathcal{R}_{en} ; x)$, a multivariate polynomial set, on the input message $x = m$.

According to the present inventive concept, wherein the number of different polynomial sets, generated by all permutations of the elementary gates composing the operator $\mathcal{R}$, is a minimum of $h!$, where $h$ is a size of a maximal set of pairwise noncommuting gates in $\mathcal{R}$.

In an embodiment of the present inventive concept, the concept of a maximal set of pairwise noncommuting gates within $\mathcal{R}$ is introduced, wherein pairwise noncommuting gates satisfy $A \cdot B \neq B \cdot A$, ensuring that their order impacts the resulting transformations. Besides, the size of the maximal set is denoted as $h$, capturing the structural complexity of $\mathcal{R}$.

As a result, attempting to reconstruct the public key $\mathcal{P}_{w,k} (\mathcal{R}_{en} ; x)$ generated by an encryption mapping $\mathcal{R}_{en}$ with a maximal set of size $h$ incurs a combinatorial complexity of at least $h!$.

The overall complexity is given by $h_l! \cdot h_{l-1}! \cdots h_1!$ for encryption mappings $\mathcal{R}_{en}$ composed of multiple disjoint subsets of mutually noncommuting gates ($h_r, r \in [l]$). This establishes a cryptographic complexity criterion based on the structural properties of the encryption operator $\mathcal{R}$. This result may directly quantify the security strength of the encryption mapping of the present inventive concept.

According to an embodiment of the present inventive concept, the w-qubit first ciphertext $|c\rangle$ may be decrypted to $|m\rangle \otimes |r\rangle = \mathcal{R}_{en} |c\rangle$ by the first encryption mapping $\mathcal{R}_{en}$ to recover the plaintext m.

The complexities of attacking the invertible message encryption, IME, of $w$ qubits is proven to satisfy the complexity criteria $T_{de\text{-}NC} > T_{ICRP} > T_{XL} > 2^w$, where $T_{de\text{-}NC}$ is the decompositional noncommutativity complexity for this IME, $T_{ICRP}$ is the complexity of solving Invertible Circuit Reconstruction Problem (ICRP) for this IME, $T_{XL}$ is the complexity of attacking this IME via the XL algorithm, and $2^w$ is the complexity of attacking this IME via the brute-force method.

The complexity criteria of IME suggest that attacking the private key is more difficult than breaking the public key or the ciphertext.

Grounded on the complexity criteria, the security strength of IME may be straightforwardly increased with moderate efforts, whose minimum strength grows linearly with the length of input plaintext.

Based on the complexity criteria, the security of IME with a public key $\mathcal{P}_{w,k} (\mathcal{R}_{en} ; x)$ surpasses the post-quantum standard $2^{128}$, and further attains the suggested threshold $2^{1024}$ of hyper quantum resilience.

The security requirements of IME fulfill the advanced privacy demands beyond the post-quantum standards, especially surpassing the security level 256 bits.

The security requirements of IME prevent information from quantum attacks, including Grover's algorithm, quantum annealing and quantum Groebner-basis algorithm.

Please further refer to FIG. 2. IME can be designed into a multipartite version for message encryption, denoted as *multipartite IME*, by generating a set of E independent key pairs ($\mathcal{P}_{w_j,k_j} (\mathcal{R}_{en,j} ; x_j), \mathcal{R}_{en,j}$), $1 \leq j \leq E$, where the $j$-th member possesses the polynomial set, $\mathcal{P}_{w_j,k_j} (\mathcal{R}_{en,j} ; x_j)$, serving as the $j$-th public key and the $j$-th encryption mapping, $\mathcal{R}_{en,j}$ serving as the $j$-th private key, $k_j$ is the bit-length of the plaintext $x_j \in Z_2^{k_j}$ and $w_j$ the number of polynomials in $\mathcal{P}_{w_j,k_j} (\mathcal{R}_{en,j} ; x_j)$.

In multipartite IME, a number E of messages/plaintexts $m_j \in Z_2^{k_j}$ are prepared, each $m_j$ is encoded into a ciphertext $c_j$ of $w_j$ qubits, and then a culminated ciphertext $|c\rangle = |c_1\rangle \otimes |c_2\rangle \otimes \cdots \otimes |c_E\rangle$ is generated, where the message $m_j$ of the j-th member is a state of $k_j$ qubits, $1 \leq j \leq E$ and $k_j \leq w_j$.

In multipartite IME, each individual ciphertext $c_j$ is decrypted into $m_j$ via $\mathcal{R}_{en,j}$.

The multipartite IME follows a similar security criteria as those in IME, $T_{de\text{-}NC} > T_{ICRP} > T_{XL} > 2^w$, here

$$w = \sum_{j=1}^{E} w_j$$ , and also inherits similar security requirements as the aforementioned in IME.

Due to the duality, the ciphertext $|\boldsymbol{c}\rangle = |\mathcal{R}_{en} \Vdash \boldsymbol{x}\rangle_{x=e}$, through evaluating $\mathcal{P}_{w,k}(\mathcal{R}_{en};x)$ over a w-qubit state $|\boldsymbol{e}\rangle$ to $|\boldsymbol{m}\rangle \otimes |\boldsymbol{r}\rangle$, equals $\widehat{\mathcal{R}}_{en}|\boldsymbol{e}\rangle$. Here, $|\boldsymbol{r}\rangle$ is a basis state of w - k qubits randomly assigned and $\widehat{\mathcal{R}}_{en}$ the order-reversed product of $\mathcal{R}_{en}$. Since every elementary gate is its own inverse, $\widehat{\mathcal{R}}_{en}^{-1} = \mathcal{R}_{en}$. The plaintext $|\boldsymbol{m}\rangle$ is thereby recovered from $\widehat{\mathcal{R}}_{en}^{-1}|\boldsymbol{c}\rangle = \mathcal{R}_{en}|\boldsymbol{c}\rangle = |\boldsymbol{e}\rangle$.

According to the present inventive concept, the duality relationship and the invertibility of elementary gates used in $\mathcal{R}_{en}$ lead to the exactness of decryption, so that the plaintext is able to be accurately recovered from the ciphertext without error, which may distinguish the system of the present inventive concept from the noisy decryption methods in traditional systems.

According to the present inventive concept, the encrypted polynomial set may be generated from an encrypted action which is defined as:

$$\mathcal{U}_{cv}^{(j)} = (\mathcal{R}_{en,j}^{-1} \otimes I_{n_j - w_j}) M_j \mathcal{R}_{cv,j},$$

where $\mathcal{R}_{en,j}$ and $\mathcal{R}_{cv,j}$ are the encryption transformations, $\mathcal{R}_{en,j}^{-1}$ is the inverse of $\mathcal{R}_{en,j}$ , $M_j$ is the operation comprising elementary gates and $I_{n_j-w_j}$ is an identity operator of $n_j$ - $w_j$ qubits.

According to the present inventive concept, a circuit of each of the encrypted action $\mathcal{U}_{cv}^{(j)}$ may be further divided into a number $j_t$ of sections for positive integers $j_t$ and $t$ to generate refined encrypted polynomial sets.

According to an embodiment of the present inventive concept, an encrypted action $\mathcal{U}_{cv}$, is defined, wherein $\mathcal{U}_{cv} = (\mathcal{R}_{en}^{-1} \otimes I)\widehat{M}\mathcal{R}_{cv}$ , with $\hat{M}$ is an order-reversed product of $M$, $n \geq w$, and $I$ is an identity operator of $n$ - $w$ qubits;

the w-qubit ciphertext $|\boldsymbol{c}\rangle$ of the k-qubit plaintext $|\boldsymbol{m}\rangle$ derived from the second encryption operator $\mathcal{R}_{cv}$ and an n-qubit action M may be given, $n = w \geq k$, generating an encrypted polynomial set:

$$\mathcal{P}_{n,n}(\mathcal{U}_{cv}^{\ddagger}; z) = \{\alpha_i(z) = \mathcal{U}_{cv}^{\ddagger} \Vdash z_i : i \in [n]\} \quad \dots \text{Eq. 3,}$$

wherein

$$\mathcal{U}_{cv}^{\ddagger}$$

is an encrypted action, and expressed as

$$\mathcal{U}_{cv}^{\ddagger} = \mathcal{R}_{cv}^{-1}\widehat{M}\mathcal{R}_{cv},$$

which is the adjoint of the encrypted action. Besides, $\alpha_i(z)$ is the i-th polynomial in the encrypted polynomial set

$$\mathcal{P}_{n,n}(\mathcal{U}_{cv}^{\ddagger}; z), z = z_1 z_2 \dots z_n \in Z_2^n$$

which is derived by applying

$$\mathcal{U}_{cv}^{\ddagger}$$

on the variables *z*.

The present inventive concept borrows the mechanism of QAPFTQC to encipher computations.

Assume that a k-qubit plaintext is encoded into a w-qubit ciphertext via a multivariate polynomial set generated by the first encryption operator $\mathcal{R}_{en}$ , which is the encryption mapping, $k \leq w$. Accompanied by the second encryption operator $\mathcal{R}_{cv}$ , an *n*-qubit operation M, a circuit of elementary gates, is concealed into the encrypted action

$$\mathcal{U}_{cv} = (\mathcal{R}_{en}^{-1} \otimes I)\hat{M}\mathcal{R}_{cv}$$ with $\hat{M}$ is an order-reversed product of *M*, $n \geq w$.

This encrypted action is a simplified form of the fault tolerant encode in QAPFTQC. Let the circuit of $\mathcal{U}_{cv}$ be rephrased as a set of *n* multivariate polynomials. Grounded on the poetic duality, evaluating this polynomial set on the ciphertext yields the cryptovaluation. Finally, $\mathcal{R}_{cv}$ may serve as the private cryptovaluation key to decrypt the encrypted computation.

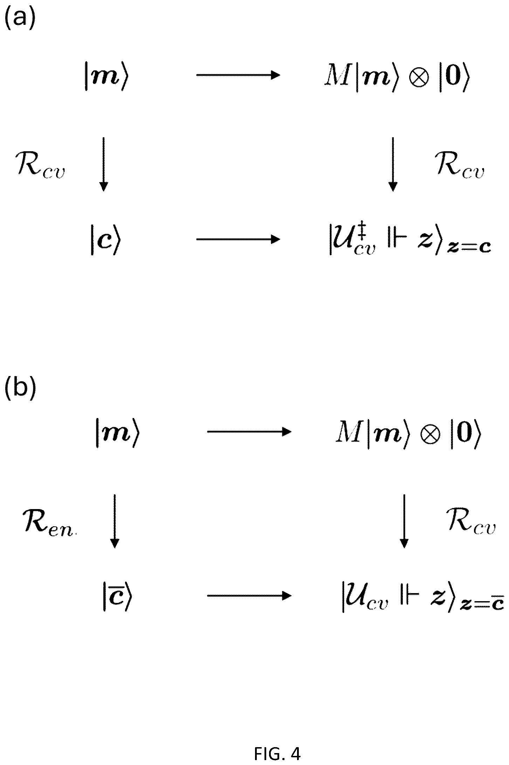

In the case w = n, the message and computation are mapped into an identical space of encryption as depicted in Fig. 4(a).

Please further refer to FIG. 1. In this embodiment, the polynomial set $\mathcal{P}_{w,k}$ ($\mathcal{R}_{cv}$ ; ***x***) generated by $\mathcal{R}_{cv}$ , which is the public encryption key for invertible message encryption, IME, encodes $|\boldsymbol{m}\rangle$ into a ciphertext $|\boldsymbol{c}\rangle$. On the strength of the duality relation, this ciphertext is alternatively written as $|\boldsymbol{c}\rangle = \hat{\mathcal{R}}_{cv} |\boldsymbol{m}\rangle \otimes |\boldsymbol{0}\rangle$ from exercising the order-reversed product $\hat{\mathcal{R}}_{cv}$ of $\mathcal{R}_{cv}$ on the product state $|\boldsymbol{m}\rangle \otimes |\boldsymbol{0}\rangle$ of $|\boldsymbol{m}\rangle$ and the (*n* - *k*) -qubit null state $|\boldsymbol{0}\rangle$. A step further is drawing $\mathcal{R}_{cv}$ that encodes M into the composition

$$\mathcal{U}_{cv}^{\ddagger} = \hat{\mathcal{R}}_{cv}M\mathcal{R}_{cv}^{-1},$$

resulting in the encrypted computation

$$\hat{\mathcal{U}}_{cv}^{\ddagger}|\boldsymbol{c}\rangle = \hat{\mathcal{R}}_{cv}M|\boldsymbol{m}\rangle \otimes |\boldsymbol{0}\rangle$$

called the cryptovaluation. Here, is the order-reversed product of the encrypted action

$$\mathcal{U}_{cv}^{\ddagger}.$$

With the associated state

$$\mathcal{U}_{cv}^{\ddagger} \Vdash z\rangle = |\alpha_1(z)\alpha_2(z) \cdots \alpha_n(z)\rangle$$

and $i \in [n]$, it relishes the duality

$$\hat{\mathcal{U}}_{cv}^{\ddagger}|\boldsymbol{c}\rangle = \mathcal{U}_{cv}^{\ddagger} \Vdash z\rangle_{z=c}$$

between the state computation and the polynomial evaluation. Thus, the cryptovaluation is engaged in

$$\mathcal{U}_{cv}^{\ddagger} \Vdash z\rangle_{z=c}$$

of calculating the polynomial set

$$\mathcal{P}_{n,n}\big(\mathcal{U}_{cv}^{\ddagger};z\big)$$

on the ciphertext $|c\rangle$. The operator $\hat{\mathcal{R}}_{cv}^{-1} = \mathcal{R}_{cv}$ works as the private cryptovaluation key of the decryption, namely

$\mathcal{R}_{cv}\big|\mathcal{U}_{cv}^{\ddagger} \Vdash z\rangle_{z=c} = \mathcal{R}_{cv}\hat{\mathcal{U}}_{cv}^{\ddagger}|c\rangle = M|\boldsymbol{m}\rangle \otimes$ $|0\rangle$. Refer to Fig. 8(a) for the diagram outlining the process in the system of the present inventive concept. In the scenario where $n = w$, the message and computation are elegantly sent into an identical space of encryption under the same encryption operator $\mathcal{R}_{cv}$ .

According to the present inventive concept, $\mathcal{R}_{en}^{-1}$ is the inverse of the first encryption operator, which decodes the ciphertext into a form compatible with $\hat{M}$. The use of $\hat{M}$ make sure the invertibility of the computation and the consistency with the EHE framework's duality principles in the system of the present inventive concept.

Besides, the encrypted action $\mathcal{U}_{cv}$ enables secure computation by maintaining the encrypted state throughout the process, preserving data confidentiality.

According to an embodiment of the present inventive concept, the w-qubit ciphertext $|c\rangle$ of the k-qubit plaintext $|m\rangle$ derived from the first encryption operator $\mathcal{R}_{en}$ and an n-qubit action $M$ is given, $n > w \geq k$, generating an encrypted polynomial set:

$$\mathcal{P}_{n,w}(\mathcal{U}_{cv};z) = \{\beta_i(z) = \mathcal{U}_{cv} \Vdash z_i : i \in [n]\} \ldots \text{Eq. 4,}$$

wherein $\beta_i(z)$ is the $i$ -th polynomial in the encrypted polynomial set $\mathcal{P}_{n,w}(\mathcal{U}_{cv};z), z = z_1 z_2 \ldots z_n \in Z_2^n$ , encapsulating the transformation applied by $\mathcal{U}_{cv}$ , which is shown in FIG. 1.

Here, the encoded operation $\hat{\mathcal{U}}_{cv} = \hat{\mathcal{R}}_{cv} M(\hat{\mathcal{R}}_{en}^{-1} \otimes I)$ is the order-reversed product of encrypted action $\mathcal{U}_{cv}$ , with $M$ sandwiched by the operator of input errors $\hat{\mathcal{R}}_{en}^{-1} \otimes I$ and the operator of output errors $\hat{\mathcal{R}}_{cv}$ .

The proof is similar as mentioned above, but replacing the encryption operator $\mathcal{R}_{cv}^{-1}$ of

$$\mathcal{U}_{cv}^{\ddagger}$$

by $\mathcal{R}_{en}^{-1} \otimes I$ , the encrypted polynomial set

$$\mathcal{P}_{n,n}\big(\mathcal{U}_{cv}^{\ddagger};z\big)$$

by $\mathcal{P}_{n,w}(\mathcal{U}_{cv};z)$, and the polynomial state

$$\big|\mathcal{U}_{cv}^{\ddagger} \Vdash z\big\rangle$$

by

$$|\mathcal{U}_{cv} \Vdash z\rangle.$$

Similarly, ascertained from the duality relation, the output of the cryptovaluation is the polynomial evaluation $|\mathcal{U}_{cv} \Vdash z\rangle_{z=\bar{c}}$ on the product state $|\bar{c}\rangle = |c\rangle \otimes |0'\rangle$ of $|c\rangle$ and a null basis state $|0'\rangle$ of $n - w$ qubits. Likewise, the operator $\mathcal{R}_{cv}$ decrypts the

evaluation. Please refer to FIG. 4(b) which pictures this process in the system of the present inventive concept.

According to an embodiment of the present inventive concept, a number e of sectional encrypted circuits $\mathcal{U}_{cv,q}$ composing $\mathcal{U}_{cv}$ may be paralleled, $q \in [e]$; and a sequential evaluation of encrypted polynomial sets may be generated as:

$$\mathcal{P}_{n,w}\big(\mathcal{U}_{cv,q};z\big) = \{\beta_{i,q}(z) = \mathcal{U}_{cv,q} \Vdash z_i : i \in [n]\} \ ....\text{Eq. 5.}$$

In an embodiment of the present inventive concept, ciphertext $|c\rangle$, a w-qubit ciphertext derived from the first encryption mapping $\mathcal{R}_{en}$, encodes the k-qubit plaintext $|m\rangle$, wherein $|c\rangle$ may serve as the input for the encrypted computational action. Then, $\mathcal{U}_{cv}$ may further transform the ciphertext $|c\rangle$ within the encrypted domain. Next, the encrypted polynomial set $\mathcal{P}_{n,w}$ ($\mathcal{U}_{cv}$ ; z) is generated, where each $\beta_i(z)$ may correspond to a transformed variable $z_i$ under the action of $\mathcal{U}_{cv}$.

In another embodiment of the present inventive concept, the encrypted action $\mathcal{U}_{cv}$ may be partitioned into e sectional encrypted circuits $\mathcal{U}_{cv,q}$, each of the sectional circuit may independently handle a subset of the computations, facilitating the parallelized execution. Each of the sectional circuit $\mathcal{U}_{cv}$ may be applied to the variables $z_i$ in the encrypted domain.

For every circuit q, an encrypted polynomial set $\mathcal{P}_{n,w}$ ( $\mathcal{U}_{cv,q}$ ; z) is generated $\mathcal{P}_{n,w}$ ( $\mathcal{U}_{cv,q}$ ; z) = {$\beta_{i,q}(z)$ = $\mathcal{U}_{cv,q}$ $\Vdash$ $z_i$:$i \in [n]$}, where each $\beta_{i,q}(z)$ may correspond to a transformed variable $z_i$ by the sectional circuit $\mathcal{U}_{cv,q}$.

After all sectional circuits $\mathcal{U}_{cv,q}$ have been applied, their outputs, the polynomial sets, may be sequentially combined. The sequential evaluation consolidates the partial results from each $\mathcal{P}_{n,w}$ ( $\mathcal{U}_{cv,q}$ ; z) into the final encrypted polynomial set to complete the computation.

The complexity of attacking the computation encryption, cryptovaluation, of n qubits on w-qubit ciphertexts is greater than $2^w$.

In a cryptovaluation, attacking the private key is more difficult than breaking the public key or the ciphertext.

In a cryptovaluation, the security strength may be straightforwardly increased with moderate efforts, whose minimum strength grows linearly with the length of input ciphertext.

In a cryptovaluation, the security surpasses the post-quantum standard $2^{128}$, and further attains the suggested threshold $2^{1024}$ of hyper quantum resilience.

The security requirements of cryptovaluation fulfill the advanced privacy demands beyond the post-quantum standards, especially surpassing the security level 256 bits.

SMPEHE follows similar security criteria and requirements as those in EHE.

The security requirements of cryptovaluation prevent information from quantum attacks, including Grover's algorithm, quantum annealing and quantum Groebner-basis algorithm.

According to the present inventive concept, there is a first communication between the first participant and the second participant, wherein the first communication occurs in parallel or sequentially, which includes the distribution of public encryption keys from the first participant to the second participant.

According to an embodiment of the present inventive concept, the first communication between the first participant and the second participant may refer to the distribution of the public encryption key from the first participant to the second participant. This may enable the second participant to encrypt their plaintext data into ciphertexts.

In an embodiment, the ciphertext $|c\rangle$ is the evaluation of the public key $\mathcal{P}_{w,k}$ ( $\mathcal{R}_{en}$ ; $\boldsymbol{x}$), a multivariate polynomial set, on the input message x = m.

In this embodiment, the second participant may use the public encryption key to transform the plaintext message m into the first ciphertext $|c\rangle$. The process of accessing the public encryption key is the foundational step in the first communication between the participants.

According to the present inventive concept, there is a second communication between the first participant and the third participant, wherein the second communication occurs in parallel or sequentially.

According to the present inventive concept, the second communication includes the transmission of the computation instruction from the first participant to the third participant; and the transmission of the second ciphertext from the third participant to the first participant.

According to the present inventive concept, the second communication between the first participant and the third participant may involve two key steps, transmission of computation instructions, and transmission of computation results.

In an embodiment of the present inventive concept, the first participant may send encrypted polynomial sets, which may represent the computation instructions, to the third participant to perform computations on the encrypted data. This allows the third participant to perform operations on the encrypted data. After performing the computations, the third participant may further send back the result of the encrypted computation, referred to as the second ciphertext, to the first participant to decrypt the result using the private key.

In an embodiment, the encrypted computation which refers as cryptovaluation is the fruition of evaluating the encrypted polynomial set on an input ciphertext. The result of the encrypted computation is the evaluated polynomial set, which is returned as an encrypted output. The encrypted results are transmitted to the first participant for decryption.

In this embodiment, the first participant sends the encrypted polynomial set to the third participant as computation instructions. The encrypted polynomial set encodes the function to be computed. After evaluating the polynomial set, the third participant sends the result back to the first participant as an encrypted output, i.e. the second ciphertext. This explicitly states that the encrypted computation results are sent from the third participant to the first participant.

According to the present inventive concept, there is a third communication between the second participant and the third participant wherein the third communication occurs in parallel or sequentially, which includes the distribution of the first ciphertext from the second participant to the third participant.

According to the present inventive concept, the third communication between the second participant and the third participant involves the transmission of the first ciphertext (i.e., the encrypted message) from the second participant to the third participant. The third communication may allow the computation provider to receive the encrypted data on which the computations are performed.

In an embodiment of the present inventive concept, the ciphertext $|c\rangle$ is the evaluation of the public key $\mathcal{P}_{w,k}$ ($\mathcal{R}_{en}$ ; $\boldsymbol{x}$) on the input message $x = m$. The encrypted message is transmitted to the computation provider. Encrypted polynomial sets and ciphertexts may be processed either sequentially or in parallel to optimize computational efficiency.

In this embodiment, the formation of the first ciphertext by the second participant after encrypting the plaintext using the public key provided by the first participant. The transmission of the first ciphertext from the second participant to the third participant ensures that the encrypted data reaches the third participant for further processing. The data flow, including ciphertext transmission can be implemented using either parallel or sequential methods, depending on the architecture.

The third communication ensures that the computation provider receives the necessary encrypted data to perform cryptovaluation (the computation on encrypted data).

This communication pathway supports flexible data transfer methods in parallel or sequential but primarily focuses on securely transferring the encrypted input data without exposing the plaintext.

The foregoing descriptions of the detailed embodiments are only illustrated to disclose the features and functions of the present inventive concept and not restrictive of the scope of the present inventive concept. It should be understood to those in the art that all modifications and variations according to the spirit and principle in the disclosure of the present inventive concept should fall within the scope of the appended claims.

## Claims

1. A system for secure multi-party exact homomorphic encryption (SMPEHE), wherein the system comprises a first participant as a model provider/data receiver, a second participant as a data provider/data owner and a third participant as a computation provider, wherein the system further comprises:

   a key generation module within the first participant, which is configured to produce an encryption mapping comprising an ordered product of elementary gates; to generate a multivariate polynomial set, serving as a public encryption key, via the encryption mapping; to form an encryption operator serving as a private key; and to create an encrypted polynomial set representing a computational instruction based on an encrypted action;
   a message encryption module within the second participant, which is configured to encode a plaintext message into a first ciphertext by the public key provided by the first participant; and to transmit the first ciphertext to the third participant; and
   a computation module within the third participant, which is configured to receive the first ciphertext; and to perform a computation on the received first ciphertext by evaluating the encrypted polynomial set.

2. The system of claim 1, wherein the computation module is further configured to output a second ciphertext; and to transmit the second ciphertext to the first participant.

3. The system of claim 2, wherein the system further comprises a decryption module within the first participant, which is configured to decrypt the second ciphertext by using the private key to retrieve a computation result.

4. The system of claim 3, wherein the encryption mapping is generated by combining elementary gates, including negation, Toffoli, CNOT, and multi-controlled gates, to form an encryption transformation.

5. The system of claim 4, wherein the public encryption key is a multivariate polynomial set generated through the corresponding encryption mapping.

6. The system of claims 1 or 5, wherein the encrypted polynomial set is generated by the encrypted action composed of a desired operation, the encryption mapping and the encryption operator, and wherein the polynomial set is used for performing computations on the first ciphertext.

7. The system of claim 6, wherein the computation module evaluates the encrypted polynomial set in parallel or sequentially on the first ciphertext to produce the second ciphertext.

8. The system of claim 7, wherein the first ciphertext transmitted by the second participant is a tensor-product state of multiple individual ciphertexts.

9. The system of claim 8, wherein the encrypted polynomial set is generated from an encrypted action which is defined as:

$$\mathcal{U}_{cv}^{(j)} = (\mathcal{R}_{en,j}^{-1} \otimes I_{n_j - w_j}) M_j \mathcal{R}_{cv,j},$$

where $\mathcal{R}_{en,j}$ and $\mathcal{R}_{cv,j}$ are the encryption transformations, $\mathcal{R}_{en,j}^{-1}$ is the inverse of $\mathcal{R}_{en,j}$, $M_j$ is the operation comprising elementary gates and $I_{n_j - w_j}$ is an identity operator of $n_j - w_j$ qubits.

10. The system of claim 9, wherein a circuit of each of the encrypted action $\mathcal{U}_{cv}^{(j)}$ is further divided into a number $j_t$ of sections for positive integers $j_t$ and $t$ to generate refined encrypted polynomial sets.

11. The system of claim 10, wherein there is a first communication between the first participant and the second participant, wherein the first communication occurs in parallel or sequentially, which includes the distribution of public encryption keys from the first participant to the second participant.

12. The system of claim 11, wherein there is a second communication between the first participant and the third participant, wherein the second communication occurs in parallel or sequentially, which includes:

the transmission of the computation instruction from the first participant to the third participant; and
the transmission of the second ciphertext from the third participant to the first participant.

13. The system of claim 11, wherein there is a third communication between the second participant and the third participant wherein the third communication occurs in parallel or sequentially, which includes the distribution of the first ciphertext from the second participant to the third participant.

14. A computer-implemented method for performing secure multi-party exact homomorphic encryption (SMPEHE) involving a first participant as a model provider/data receiver, a second participant as data provider/a data owner and a third participant as a computation provider, wherein the method comprises:

S10. randomly selecting $E \le D$ members from a group of $D$ parties in the first participant;
S20. generating E independent key pairs, wherein each of the independent key pairs comprises, for $j = 1,2,\cdots,E$:

a public key $\mathcal{P}_{w_j,k_j}(\mathcal{R}_{en,j}\,;\boldsymbol{x}_j)$, a multivariate polynomial set generated by an encryption mapping $\mathcal{R}_{en,j}$ ; and

a private key $\mathcal{R}_{en,j}$ , corresponding to the public key;

S30. preparing E operations $M_j$ of $n$ qubits, wherein each of the operation $M_j$ is composed of elementary gates;

S40. generating E encryption transformations $\mathcal{R}_{cv,j}$ of $n$ qubits, wherein each of the encryption transformation $\mathcal{R}_{cv,j}$ composed of elementary gates;

S50. creating E encrypted polynomial sets $\mathcal{P}_{n_j,w_j}(\mathcal{U}_{cv}^{(j)};\boldsymbol{z}_j)$ based on the $j$-th encrypted action $\mathcal{U}_{cv}^{(j)} = (\mathcal{R}_{en,j}^{-1} \otimes I_{n_j-w_j})M_j\mathcal{R}_{cv,j}$ , where $M_j$ is a desired operation of the $j$-th member, $\mathcal{R}_{en,j}^{-1}$ is an inverse of $\mathcal{R}_{en,j}$ and $I_{n_j-w_j}$ is an identity operator for $n_j$ - $w_j$ qubits;

S60. publicizing a set of public keys $\{\mathcal{P}_{w_j,k_j}(\mathcal{R}_{en,j}\,;\boldsymbol{x}_j): j = 1,2, \cdots , E\}$; and

570. transmitting an encrypted polynomial set $\left\{\mathcal{P}_{n_j,w_j}(\mathcal{U}_{cv}^{(j)};\boldsymbol{z}_j): j = 1,2,\cdots,E\right\}$ to the third participant.

**15.** The method of claim 14, wherein the method further comprises , for $j$ = 1,2, $\cdots$ ,$E$:

S80. preparing E plaintext messages $\boldsymbol{m}_j \in Z_2^{k_j}$ , each of which represented as a $k_j$-qubit state, where $k_j \le w_j$;

S90. encrypting each of the plaintext $\boldsymbol{m}_j$ into a first ciphertext $\boldsymbol{c}_j$ using the corresponding public key $\mathcal{P}_{w_j,k_j}(\mathcal{R}_{en,j}\,;\boldsymbol{x}_j)$;
S 100. creating a tensor-product state of the ciphertexts $|\boldsymbol{c}\rangle = |\boldsymbol{c}_1\rangle \otimes |\boldsymbol{c}_2\rangle \otimes \cdots \otimes |\boldsymbol{c}_E\rangle$; and
S 110. transmitting the tensor-product the ciphertext state $|\boldsymbol{c}\rangle$ to the third participant.

**16.** The method of claim 15, wherein the method further comprises:

S 120. distributing the encrypted polynomial sets $\left\{\mathcal{P}_{n_j,w_j}(\mathcal{U}_{cv}^{(j)};\boldsymbol{z}_j): j = 1,2,\cdots,E\right\}$ among L independent third participants;

S130. evaluating each of the encrypted polynomial set $\mathcal{P}_{n_j,w_j}(\mathcal{U}_{cv}^{(j)};\boldsymbol{z}_j)$ on an input $|\bar{\boldsymbol{c}}_j\rangle = |\boldsymbol{c}_j\rangle \otimes |\boldsymbol{0}_{n_j-w_j}\rangle$, where $|\boldsymbol{0}_{n_j-w_j}\rangle$ is a null state of $n_j$ - $w_j$ qubits;
S 140. generating the second ciphertexts $|\boldsymbol{s}\rangle = |\boldsymbol{s}_1\rangle \otimes |\boldsymbol{s}_2\rangle \otimes \cdots \otimes |\boldsymbol{s}_E\rangle$; and
S 150. transmitting the second ciphertexts $|\boldsymbol{s}\rangle$ to the first participant.

**17.** The method of claim 16, wherein the method further comprises:

S 160. decrypting each of the second ciphertext $|\boldsymbol{s}_j\rangle$ using the corresponding private key $\mathcal{R}_{cv,j}$ to recover computation outcomes.

**18.** The method of claim 15, wherein each of the encryption mapping $\mathcal{R}_{en,j}$ is composed of elementary gates selected from the group consisting of negation, Toffoli, CNOT, and multi-controlled gates.

**19.** The method of claim 18, wherein each of the public key $\mathcal{P}_{w_j,k_j}(\mathcal{R}_{en,j}\,;\boldsymbol{x}_j)$ is generated by applying the encryption mapping $\mathcal{R}_{en,j}$ to an initial polynomial set containing linear and nonlinear polynomials.

20. The method of claim 17, wherein the encrypted polynomial sets $\mathcal{P}_{n_j,w_j}\left(\mathcal{U}_{cv}^{(j)}; z_j\right)$ encode computation instructions for operations performed by the third participant.

21. The method of claim 15, wherein each of the first ciphertext $c_j$ is generated by evaluating the public key $\mathcal{P}_{w_j,k_j}(\mathcal{R}_{en,j}\ ; x_j)$ on the plaintext message $m_j$, producing a bit-length $k_j \leq w_j$.

22. The method of claim 16, wherein the tensor-product state of the first ciphertexts is transmitted securely to the third participant without revealing the plaintext messages.

23. The method of claim 16, wherein the encrypted polynomial sets are evaluated independently or sequentially on the first input ciphertext to optimize computational efficiency.

24. The method of claim 17, wherein the private key $\mathcal{R}_{cv,j}$ is used to decrypt the second ciphertexts.

25. The method of claims 11 or 15, wherein the method further comprises distributing the public encryption keys from the first participant to the second participant in parallel or sequentially.

26. The method of any of claims 12, 16 or 17, wherein the method further comprises:

    transmitting computation instructions from the first participant to the third participant in parallel or sequentially; and
    transmitting the second ciphertexts from the third participant to the first participant in parallel or sequentially.

27. The method of claims 13 or 16, wherein the method further comprises: transmitting the first ciphertexts from the second participant to the third participant in parallel or sequentially.

FIG. 1

FIG. 2

EP 4 589 878 A1

EP 4 589 878 A1

$a_r$ — $\mathcal{S}_1^0$ — $a_r + 1$

negation

$a_i$ — $a_i$
$a_r$ — $a_r + a_i$

CNOT

$a_i$ — $a_r$
$a_r$ — $a_i$

SWAP

$a_i$ — $a_i$
$a_j$ — $a_j$
$a_r$ — $a_r + (a_i \cdot a_j)$

Toffoli gate

$a_1$ — $a_1$
$a_2$ — $a_2$
$\vdots$ — $\vdots$
$a_v$ — $a_v$
$a_r$ — $a_r + a_1 a_2 \cdots a_v$

multi-controlled gate

$a_1$ — $a_1$
$a_2$ — $a_2$
$\vdots$ — $\vdots$
$a_i$ — $a_i$
$\vdots$ — $\vdots$
$a_v$ — $a_v$
$a_r$ — $a_r + \bar{a}_1 a_2 \cdots \bar{a}_i \cdots a_v$

multi-controlled gate

FIG. 3

(a)

$$|m\rangle \longrightarrow M|m\rangle \otimes |0\rangle$$

$$\mathcal{R}_{cv} \downarrow \qquad \downarrow \mathcal{R}_{cv}$$

$$|c\rangle \longrightarrow |\mathcal{U}_{cv}^{\ddagger} \Vdash z\rangle_{z=c}$$

(b)

$$|m\rangle \longrightarrow M|m\rangle \otimes |0\rangle$$

$$\mathcal{R}_{en} \downarrow \qquad \downarrow \mathcal{R}_{cv}$$

$$|\bar{c}\rangle \longrightarrow |\mathcal{U}_{cv} \Vdash z\rangle_{z=\bar{c}}$$

FIG. 4

randomly selecting $E \leq D$ members from a group of $D$ parties in the first participant — S10

generating $E$ independent key pairs, each of which comprising: a public key $\mathcal{P}_{w_j, k_j}\left(\mathcal{R}_{en,j}; \; x_j\right)$, a multivariate polynomial set generated by an encryption mapping $\mathcal{R}_{en,j}$; and a private key $\mathcal{R}_{en,j}$ — S20

preparing $E$ operations $M_j$ of $n$ qubits, wherein each of $M_j$ is composed of elementary gates — S30

generating $E$ encryption transformations $\mathcal{R}_{cv,j}$ of $n$ qubits, wherein each of $\mathcal{R}_{cv,j}$ composed of elementary gates — S40

creating $E$ encrypted polynomial sets $\mathcal{P}_{n_j, w_j}(\mathcal{U}_{cv}^{(j)}; z_j)$ based on the $j$-th encrypted action $\mathcal{U}_{cv}^{(j)} = (\mathcal{R}_{en,j}^{-1} \otimes I_{n_j - w_j}) M_j \mathcal{R}_{cv,j}$ — S50

publicizing a set of public keys $\left\{\mathcal{P}_{w_j, k_j}\left(\mathcal{R}_{en,j}; \; x_j\right): j = 1, 2, \cdots, E\right\}$ — S60

transmitting an encrypted polynomial set $\left\{\mathcal{P}_{n_j, w_j}(\mathcal{U}_{cv}^{(j)}; z_j): j = 1, 2, \cdots, E\right\}$ to the third participant — S70

FIG. 5

preparing $E$ plaintext messages $m_j \in Z_2^{k_j}$, each of which represented as a $k_j$-qubit state ⎯ S80

encrypting each of the plaintext $m_j$ into a first ciphertext $c_j$ using the corresponding public key $\mathcal{P}_{w_j,k_j}\left(\mathcal{R}_{en,j};\ x_j\right)$ ⎯ S90

creating a tensor-product state of the ciphertexts $|c\rangle = |c_1\rangle \otimes |c_2\rangle \otimes \cdots \otimes |c_E\rangle$ ⎯ S100

transmitting the tensor-product the ciphertext state $|c\rangle$ to the third participant ⎯ S110

FIG. 6

distributing the encrypted polynomial sets $\left\{\mathcal{P}_{n_j,w_j}(\mathcal{U}_{cv}^{(j)};\boldsymbol{z}_j):j=1,2,\cdots,E\right\}$ among $L$ independent third participants — S120

evaluating each of the encrypted polynomial set $\mathcal{P}_{n_j,w_j}(\mathcal{U}_{cv}^{(j)};\boldsymbol{z}_j)$ on an input $|\bar{\boldsymbol{c}}_j\rangle = |\boldsymbol{c}_j\rangle \otimes \left|\boldsymbol{0}_{n_j-w_j}\right\rangle$ — S130

generating the second ciphertexts $|\boldsymbol{s}\rangle = |\boldsymbol{s}_1\rangle \otimes |\boldsymbol{s}_2\rangle \otimes \cdots \otimes |\boldsymbol{s}_E\rangle$ — S140

transmitting the second ciphertexts $|\boldsymbol{s}\rangle$ to the first participant — S150

decrypting each of the second ciphertext $|\boldsymbol{s}_j\rangle$ using the corresponding private key $\mathcal{R}_{cv,j}$ to recover computation outcomes — S160

FIG. 7

Europäisches
Patentamt

European
Patent Office

Office européen
des brevets

## EUROPEAN SEARCH REPORT

**Application Number**

EP 25 15 2007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/188343 A1 (SU ZHENG-YAO [TW] ET AL) 15 June 2023 (2023-06-15) | 1-8 | INV.<br>H04L9/00 |
| A | * paragraph [0008] - paragraph [0025] *<br>* paragraph [0034] - paragraph [0095]; figures 2A-B, 3A-B * | 9-27 | H04L9/30<br>H04L9/08 |
| A | DOBRAUNIG CHRISTOPH ET AL: "Ciminion: Symmetric Encryption Based on Toffoli-Gates over Large Finite Fields", 16 June 2021 (2021-06-16), ADVANCES IN CRYPTOLOGY - EUROCRYPT 2021; [LECTURE NOTES IN COMPUTER SCIENCE; LECT.NOTES COMPUTER], SPRINGER INTERNATIONAL PUBLISHING, CHAM, PAGE(S) 3 - 34, XP047691224,<br>ISSN: 0302-9743<br>ISBN: 978-3-030-77885-9<br>[retrieved on 2021-06-16]<br>* the whole document * | 1-27 | |

**TECHNICAL FIELDS SEARCHED (IPC)**

H04L

The present search report has been drawn up for all claims

| Place of search | Date of completion of the search | Examiner |
|---|---|---|
| Munich | 19 May 2025 | Spranger, Stephanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 2007

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2025

| Patent document cited in search report | Publication date | Patent family member(s) | Publication date |
|---|---|---|---|
| US 2023188343 A1 | 15-06-2023 | TW 202324968 A | 16-06-2023 |
| | | US 2023188343 A1 | 15-06-2023 |

For more details about this annex : see Official Journal of the European Patent Office, No. 12/82

EPO FORM P0459